# EUROPEAN PATENT SPECIFICATION

(11) **EP 0 786 377 B1**
(45) Date of publication and mention of the grant of the patent: **18.07.2001**
(21) Application number: 97105795.5
(22) Date of filing: 05.01.1994
(51) Int. Cl.: B60Q 1/38, B60Q 11/00

(54) **Signal lighting apparatus**
Lichtsignaleinrichtung
Dispositif de signalisation lumineuse

(30) Priority: 08.01.1993 JP 206693
(43) Date of publication of application: 30.07.1997
(62) Divisional of application: 94100122.4
(73) Proprietor: HONDA GIKEN KOGYO KABUSHIKI KAISHA, Minato-ku, Tokyo 107 (JP); SHINDENGEN ELECTRIC MANUFACTURING COMPANY, LIMITED, Hanno-shi, Saitama-ken 357 (JP)
(72) Inventor: Tsuchiya, Yoshihiko, K.K. Honda Gijyutsu Kenkyusho, Wako-shi, Saitama-ken 351-01 (JP); Miyamaru, Yukio, K.K. Honda Gijyutsu Kenkyusho, Wako-shi, Saitama-ken 351-01 (JP); Wakayama, Hirofumi, K.K. Honda Gijyutsu Kenkyusho, Wako-shi, Saitama-ken 351-01 (JP); Ono, Yuji, K.K. Honda Gijyutsu Kenkyusho, Wako-shi, Saitama-ken 351-01 (JP); Katase, Shigeru, Shindengen Elec.Manuf.Comp., Ltd., Hanno-shi, Saitama-ken 357 (JP)
(74) Representative: Liska, Horst, Dr.-Ing.

(56) References cited:
- DE-A- 2 108 373
- PATENT ABSTRACTS OF JAPAN vol. 009, no. 307 (M-435), 4 December 1985 & JP 60 143151 A (YAMAHA HATSUDOKI KK), 29 July 1985,

## Description

The present invention relates to a signal lighting apparatus in which signal lamps each provided with a single filament and serving as a turn signal lamp as well as a side lamp are used for a turning indication as well as a vehicle-width (side) indication.

A motorcycle having side lamps provided on both sides of the vehicle which are lit during the running of the vehicle is known (e.g. Japanese Patent Publication No. 4-15138). As shown in Fig. 3, a conventional system includes two front signal lamps 1 and 2 each having double filaments 1W(2W) and 1A(2A), the former for a front turn signal lamp and the latter for a front side lamp. The conventional system also includes two rear signal lamps 3 and 4, each having a single filament and serving as a rear turn signal lamp. Either one of the filaments 1W and 2W of the front turn signal lamps in the front lamps 1 and 2 and the filament in one of the rear lamps 3 and 4 which is on the same side as the selected one of the front lamps 1 and 2 are selectively supplied with electric power from a power source 8 through a winker relay 5 and a signal light operating switch 6. Thus, either the left signal lamps 1 and 3 or the right signal lamps 2 and 4 flash on and off according to the selected switch position of the signal light operating switch 6.

On the other hand, the filaments 1A and 2A of the side lamps in the front signal lamps 1 and 2 are selectively supplied with electric power from the power source 8 through a side lamp switch 7, which is interlocked with the signal light operating switch 6. The operation of the signal lights 1 to 4 in relation to the switch positions of the signal light operating switch 6 and the side lamp switch 7 is summarized as shown in Table 1.

**Table 1**

| Switch Position | Front Lamps | | Rear Lamps | |
|---|---|---|---|---|
| | Left | Right | Left | Right |
| L | WF (1W) | U (2W) | | |
| | | | WF (3) | U (4) |
| | U (1A) | PL (2A) | | |
| N | PL (1A) | PL (2A) | | |
| | | | U (3) | U (4) |
| | U (1W) | U (2W) | | |
| R | U (1W) | WF (2W) | | |
| | | | U (3) | WF(4) |
| | PL (1A) | U (2A) | | |
| Note: WF: On/off for Turning Indication PL: Lit for Side Indication U: Unlit | | | | |

In this conventional system however, a double selector switch is required as a right/left selector switch, which consists of the signal light operating switch 6 for selecting the turn signal lamps and the side lamp switch 7 interlocked with the signal light operating switch 6. Furthermore, each of the front signal lamps is required to have a double filament structure. The double filament structure causes a lamp body to be large and such a lamp is often specially made with increased costs.

From Patent Abstracts of Japan, Vol. 9, No. 307 (M-435) [2030], December 4, 1985, JP 60-143151A, a further lighting device for a motorcycle has been known. This known lighting device comprises two signal lamps each having a single filament and simultaneously serving as turn signal lamp and driving indicator lamp. When the signal lamps are to serve as turn signal lamps, the switching speed of a current flowing into the filaments of the signal lamps is controlled to be slow so that the signal lamps are flashing on and off. In contrast, when the signal lamps are to serve as driving indicator lamps, the switching speed of the current is faster, and in particular fast enough to give the impression of the signal lamps being continuously lit. This known lighting device is considered to represent the closest prior art.

It is the object of the present invention to provide a signal lighting apparatus which can operate signal lamps each having a single filament and serving as a turn signal lamp as well as a side lamp, can simplify the construction of a signal light operating switch and can cope with possible damage to the signal lamps.

To achieve this object, the invention is based on a vehicle signal lighting apparatus comprising: front-right, front-left, rear-right and rear-left signal lamps each having a single filament; switch means manually operable into right-turn, left-turn and neutral positions indicative of an intended traveling direction of the vehicle; oscillation means for generating first and second oscillation signals of respective first and second frequencies, said signal lamps flashing on and off in a visually recognizable manner when driven by the first oscillation signal and flashing on and off as if continuously lit when driven by the second oscillation signal.

According to the invention, the above vehicle signal lighting apparatus is characterized in that said oscillation means are arranged to further generate a third oscillation signal of a third frequency, said signal lamps flashing on and off in a visually recognizable manner when driven by the third oscillation signal which is different than when driven by the first oscillation signal, that lamp break detecting means are provided for detecting breakage of said signal lamps, and that control means are provided for selectively driving said signal lamps with the first, second and third oscillation signals in accordance with a selected position of said switch means indicative of the intended traveling direction of the vehicle and in accordance with an output of said lamp break detecting means, said control means comprising a first selector circuit and a second selector circuit, wherein said first selector circuit drives the rear signal lamp corresponding to a selected turn position with the first oscillation signal when said switch means is manipulated to the selected turn position, said second selector circuit drives the rear signal lamp on the same side as a broken front signal lamp with the third oscillation signal when either one of the front signal lamps is detected as broken by said lamp break detecting means and said switch means is manipulated to the turn position corresponding to the broken front signal lamp, said second selector circuit drives the front signal lamp on the same side as a broken rear signal lamp with the third oscillation signal when either one of the rear signal lamps is detected by said lamp break detecting means as broken and said switch means is manipulated to the turn position corresponding to the broken rear signal lamp.

Breakage in one of the signal lamps is detected by the lamp break detecting means. That is, when one of the front signal lamps is broken, one of the rear signal lamps flashes on and off at a cycle other than that for the turning indication, to indicate breakage in the front signal lamps. Similarly, when one of the rear signal lamps is broken, one of the front signal lamps flashes on and off at the cycle mentioned above, to indicate breakage in the rear signal lamps.

Preferred embodiments of the invention are defined in the dependent claims.

The present invention will become more fully understood from the detailed description given hereinbelow and the accompanying drawings which are given by way of illustration only, and thus are not limitative of the present invention, and wherein:
Fig. 1 is a block diagram showing the construction of a preferred embodiment of the present invention;
Fig. 2 is a block diagram showing the construction of a selector circuit shown in Fig. 1; and

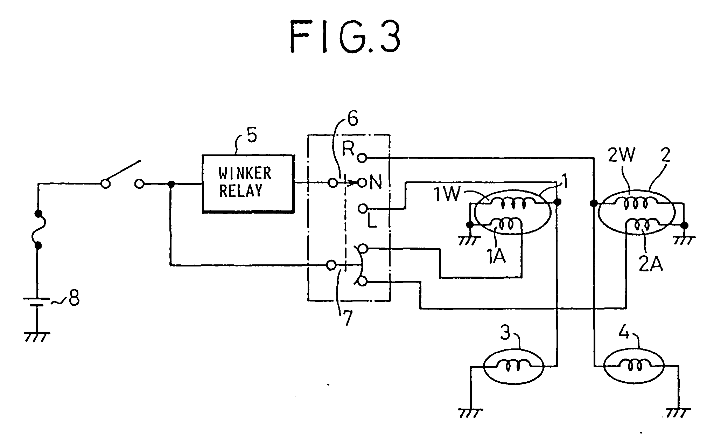

Fig. 3 is a block diagram showing the construction of a signal lighting device of a conventional system.

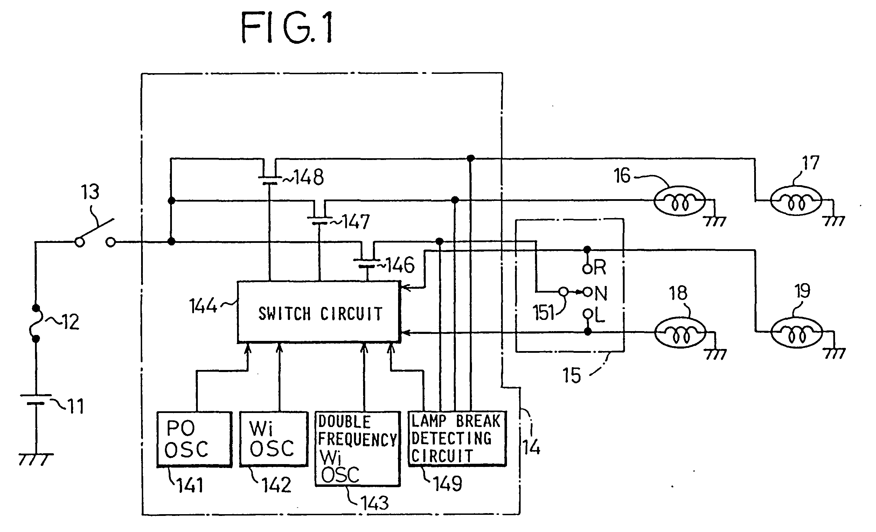

Fig. 1 is a block diagram showing the construction of a preferred embodiment according to the present invention.

In the signal lighting device of this preferred embodiment, a voltage of a battery 11 is supplied through a fuse 12 and a power switch 13 to a control unit 14. The control unit 14 includes an oscillator (POOSC) 141 for producing an oscillation output to cause signal lamps to be continuously lit for side indication, an oscillator (WiOSC) 142 for producing an oscillation output to cause the signal lamps to flash on and off for turning indication, an oscillator (double-speed WiOSC) 143 for producing an oscillation output of a frequency substantially double the frequency of the flashing for turning indication, and field effect transistors 146, 147 and 148 having drains to which the voltage through the power switch 13 is applied.

The control unit 14 further includes a selector or switch circuit 144 for supplying the oscillation output from the oscillator 142 to the gate of the field effect transistor 146 to control application of the source voltage through the field effect transistor 146 to a switching contact 151 of a signal light operating switch 15. The control unit 14 also selectively applies the oscillation outputs from the oscillators 141 and 142 to the gates of the field effect transistors 147 and 148 according to a switching position of the signal light operating switch 15 and selectively applies the oscillation output from the oscillator 143 to the gates of the field effect transistors 146, 147 and 148 in response to an output from a lamp break detecting circuit 149. The lamp break detecting circuit 149 receives source voltages of the field effect transistors 146, 147 and 148 to detect lamp breakage.

A front-left signal lamp 16 is connected as a source load to the field effect transistor 147 and is driven by the field effect transistor 147. A front-right signal lamp 17 is connected as a source load to the field effect transistor 148 and is driven by the field effect transistor 148. Output voltages of a left-side contact L and a right-side contact R of the signal light operating switch 15 are supplied to the selector circuit 144. A rear-left signal lamp 18 is driven by the output voltage of the left-side contact L and a rear-right signal lamp 19 is driven by the output voltage of the right-side contact R.

The oscillation frequency of the oscillator 141 is set to 150 Hz, for example, so that an on/off flashing of the signal lamps driven by this frequency cannot be visually recognized; the driven signal lamps will appear to be continuously lit. The oscillation frequency of the oscillator 142 is set to 85 cycles/min, for example, so that the on/off flashing of the signal lamps driven by this frequency can be visually recognized. The oscillation frequency of the oscillator 143 is set to 200 cycles/min, for example, which is about double the frequency of the oscillator 142, so that the on/off flashing of the signal lamps driven by this frequency is not only visually recognizable but is also distinguishable from the on/off flashing driven by the frequency of the oscillator 142.

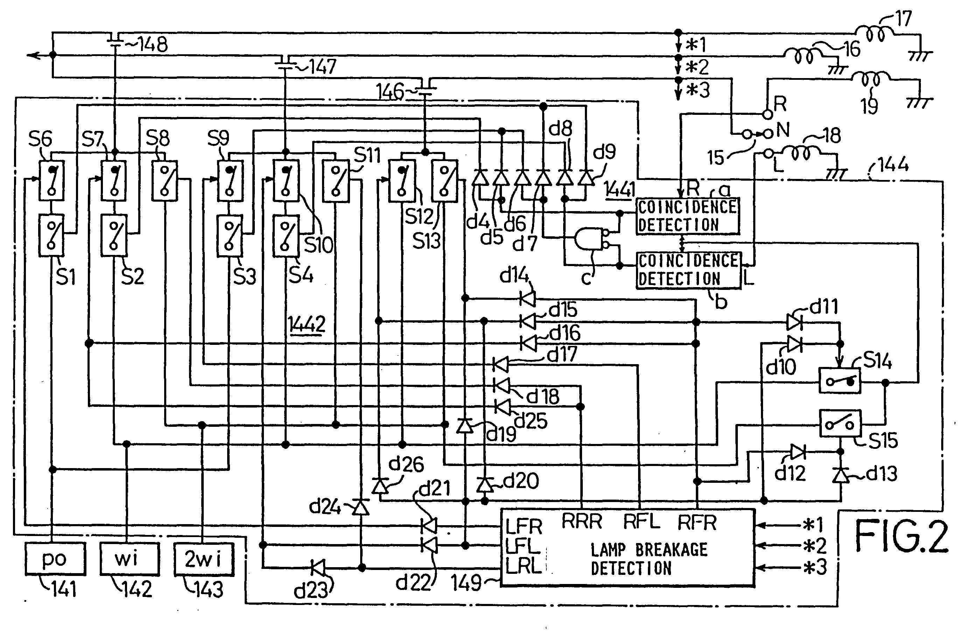

The selector circuit 144 includes a first selector circuit 1441 illustrated in Fig. 2 for selecting the oscillation outputs to be supplied to the gates of the field effect transistors 146 to 148 according to the switching position of the signal light operating switch 15. The selector circuit 144 also includes a second selector circuit 1442 for selecting the oscillation outputs to be supplied to the gates of the field effect transistors 146 to 148, in cooperation with the first selector circuit 1441, in response to the detection of breakage by the lamp break detecting circuit 149.

The first selector circuit 1441 is constructed of coincidence detecting circuits a and b, an AND gate c, diodes d4 to d9, and switch circuits S1 to S4 adapted to be on/off controlled by outputs from the coincidence detecting circuits a and b and the output from the AND gate c through the diodes d4 to d9.

Upon changing a running direction of the motorcycle to the left, the first selector circuit 1441 functions to flash on/off the front-left and the rear-left signal lights 16 and 18 driven by the frequency of the oscillator 142 and at the same time functions to continuously light the front-right signal lamp 17 driven by the output from the oscillator 141. Upon changing the running direction to the right, the first selector circuit 1441 functions to flash on/off the front-right and rear-right signal lamps 17 and 19 driven by the frequency of the oscillator 142 and at the same time functions to continuously light the front-left signal lamp 16 driven by the output from the oscillator 141. When the same running direction is maintained, the first selector circuit 1441 functions to continuously light the front-left and front-right signal lamps 16 and 17 driven by the output from the oscillator 141.

The second selector circuit 1442 is constructed of diodes d10 to d26 and switch circuits S6 to S15 adapted to be on/off controlled by outputs from the lamp break detecting circuit 149 through the diodes d10 to d26. When breakage of either the front-left signal lamp 16 or the front-right signal lamp 17 is detected, the second selector circuit 1442 functions to flash on/off either the rear-left signal lamp 18 or the rear-right signal lamp 19 driven by the frequency of the oscillator 143. When breakage of either the rear-left signal lamp 18 or the rear-right signal lamp 19 is detected, the second selector circuit 1442 functions to flash on/off either the front-left signal lamp 16 or the front-right signal lamp 17 driven by the frequency of the oscillator 143. When no breakage of the signal lamps is detected, the oscillation output from the oscillator 142 is applied to the gate of the field effect transistor 146 to repeatedly switch on and off the field effect transistor 146 driven by the frequency of the oscillator 142 to thereby intermittently apply the power source voltage to the switching contact 151 of the signal light operating switch 15.

When the running direction of the motorcycle is changed to the left, that is, when the switching contact 151 of the signal light operating switch 15 is brought into contact with the left-side contact L, the power source voltage is intermittently applied to the coincidence detecting circuit b in response to the oscillation output from the oscillator 142 through the left-side contact L of the signal light operating switch 15. The coincidence between the intermittently applied power source voltage and the oscillation output from the oscillator 142 supplied through the switch circuit S14 is detected by the coincidence detecting circuit b, which generates a coincidence detection output.

Upon receipt of the coincidence detection output from the coincidence detecting circuit b, the oscillation output from the oscillator 141 is applied to the gate of the field effect transistor 148 to thereby flash the front-right signal lamp 17 on/off driven by the frequency of the oscillator 141. The flashing speed of the front-right signal lamp 17 is so high that the signal lamp 17 appears as if continuously lit, thus making the side indication. Further, the oscillation output from the oscillator 142 is applied to the gate of the field effect transistor 147 to flash the front-left signal lamp 16 on/off driven by the frequency of the oscillator 142, for the turning indication. At the same time, the rear-left signal lamp 18 flashes on/of driven by the frequency of the oscillator 142 applied through the left-side contact L of the signal light operating switch 15, for the turning indication.

As mentioned above, the front-left signal lamp 16 and the rear-left signal lamp 18 are driven so as to flash on/off driven by the frequency of 85 cycles/min; the front-right signal lamp 17 is driven so as to be substantially lit in accordance with the oscillation output of 150 Hz; and the rear-right signal lamp 19 is kept unlit. Thus, the front-left and rear-left signal lamps 16 and 18 flash on/off to make the turning indication and the front-right signal lamp 17 is lit to make the side indication. Here, since the front-right signal lamp 17 is lit in accordance with the oscillation output of 150 Hz, the consumed electric power is relatively small as compared with the case where the lamp 17 is lit in accordance with the full voltage of the power source 11.

When the running direction of the motorcycle is changed to the right, that is, when the switching contact 151 of the signal light operating switch 15 is brought into contact with the right-side contact R, the power source voltage is intermittently applied to the coincidence detecting circuit a in response to the oscillation output from the oscillator 142 through the right-side contact R of the signal light operating switch 15. The coincidence between the intermittently applied power source voltage and the oscillation output from the oscillator 142 supplied through the switch circuit S14 is detected by the coincidence detecting circuit a, which generates a coincidence detection output.

Upon receipt of the coincidence detection output from the coincidence detecting circuit a, the oscillation output from the oscillator 142 is applied to the gate of the field effect transistor 148 to make the front-right signal lamp 17 flash on/off driven by the frequency of the oscillator 142. At the same time, the rear-right signal lamp 19 flashes on/off driven by the oscillation output from the oscillator 142 applied through the right-side contact R of the signal light operating switch 15. The lamps 17 and 19 flash on/off driven by the visually recognizable frequency, serving as the turning indication. Further, the oscillation output from the oscillator 141 is applied to the gate of the field effect transistor 147 to make the front-left signal lamp 16 flash on/off driven by the frequency of the oscillator 141. The flashing speed of the lamp 16 is so high that the lamp 16 appears as if continuously lit, thus making the side indication. Further, the rear-left signal lamp 18 is kept unlit.

As mentioned above, the front-right signal lamp 17 and the rear-right signal lamp 19 are driven so as to flash on/off driven by the frequency of 85 cycles/min; the front left signal lamp 16 is driven so as to be continuously lit in accordance with the oscillation output of 150 Hz; and the rear-left signal lamp 18 is kept unlit. Thus, the front-right and rear-right signal lamps 17 and 19 flash on/off to make the turning indication and the front-left signal lamp 16 is lit to make the side indication. Here, since the front-left signal lamp 16 is lit in accordance with the oscillation output of 150 Hz, the consumed electric power is relatively small as compared with the case where the lamp 16 is lit in accordance with the full voltage of the power source 11.

When the running direction of the motorcycle is unchanged, that is, when the switching contact 151 of the signal light operating switch 15 is kept in contact with a neutral contact N, no coincidence detection outputs are generated from the coincidence detecting circuits a and b, and a high potential output is accordingly generated from the AND gate c. The oscillation output from the oscillator 141 is applied to the gates of the field effect transistors 147 and 148.

As a result, the front-left and front-right signal lamps 16 and 17 are driven so as to be lit driven by the oscillation output of 150 Hz and the rear-left and rear-right signal lamps 18 and 19 are kept unlit. Thus, the front-left and front-right signal lamps 16 and 17 serve as the side indication. Here, since the front-left and front-right signal lamps 16 and 17 are lit in accordance with the oscillation output of 150 Hz, the consumed electric power is relatively small as compared with that in the case where the lamps 16 and 17 are lit in accordance with the full voltage of the power source 11.

The oscillation frequency of the oscillator 141 is not necessarily be limited to 150 Hz. However, if the oscillation frequency is set too low, there occurs flicker perceptible by human vision upon viewing the signal lamps. Conversely, if the oscillation frequency is set too high, a long time is required to heat the filaments in the signal lamps, causing retarded lighting after the timing of a switch operation in the signal light operating switch 15. In consideration of these points, the oscillation frequency of the oscillator 141 should be set to a proper value.

In summary, the operation of the signal lighting device of the preferred embodiment mentioned above is as follows:

**Table 2**

| | | | | |
|---|---|---|---|---|
| Switch Position | Front Lamps | | Rear Lamps | |
| | Right | Left | Right | Left |
| L | PL | WF | U | WF |
| N | PL | PL | U | U |
| R | WF | PL | WF | U |
| Note:PL: Lit for Side Indication WF: On/Off for Tirning Indication U: Unlit | | | | |

As apparent from Table 2, since the front-left and front-right signal lamps 16 and 17 serve also as the side lamps, two-filament lamps are not required.

Now, the operation in the case where one of the signal lamps is broken will be described.

When the front-right signal lamp 17 is broken under the condition when the switching contact 151 of the signal light operating switch 15 is in contact with the right-side contact R, the source potential of the field effect transistor 148 rises, and this rising is detected by the lamp break detecting circuit 149. In response to the RFR detection output from the lamp break detecting circuit 149, the switch circuit S12 is controlled to an off state and the switch circuit S13 is controlled to an on state, so that the oscillation output from the oscillator 143 is applied to the gate of the field effect transistor 146. The switch circuit S14 is controlled to an off state; the switch circuit S15 is controlled to an on state; and the switch circuit S7 is controlled to an off state, so that the oscillation output from the oscillator 141 is applied to the gate of the field effect transistor 147, and no voltage is applied to the gate of the field effect transistor 148.

Accordingly, the front-right signal lamp 17 is unlit, and the rear-right signal lamp 19 is driven on and off at a high speed (200 cycles/min). The other signal lamps stay in the same conditions as shown in Table 2. Thus, only the rear-right signal lamp 19 flashes on/off driven by a speed substantially double the speed of normal flashing.

When the rear-right signal lamp 19 is broken under the condition when the switching contact 151 of the signal light operating switch 15 is in contact with the right-side contact R, the source potential of the field effect transistor 146 rises and this rising is detected by the lamp break detecting circuit 149. In response to the detection output RRR from the lamp break detecting circuit 149, the switch circuit S8 is controlled to an on state and the switch circuit S7 is controlled to an off state, so that the oscillation output from the oscillator 143 is applied to the gate of the field effect transistor 148. Accordingly, the rear-right signal lamp 19 is unlit and the front-right signal lamp 17 is driven to flash on/off at the high speed (200 cycles/min). The other lamps stay in the same conditions as shown in Table 2. Thus, only the front-right signal lamp 17 flashes on/off with a speed substantially double the speed during normal flashing.

When the front-left signal lamp 16 is broken under the condition when the switching contact 151 of the signal light operating switch 15 is in contact with the right-side contact R, the source potential of the field effect transistor 147 rises and this rising is detected by the lamp break detecting circuit 149. In response to the RFL detection output from the lamp break detecting circuit 149, the switch circuit S9 is controlled to an off state, so that no voltage is applied to the gate of the field effect transistor 147; the oscillation output from the oscillator 142 is applied to the gate of the field effect transistor 146; and the oscillation output from the oscillator 142 is applied also to the gate of the field effect transistor 148. Accordingly, the front-left signal lamp 16 is unlit and the other signal lamps stay in the same conditions as shown in Table 2.

When the rear-left signal lamp 18 is broken under the condition when the switching contact 151 of the signal light operating switch 15 is in contact with the right-side contact R, the rear-left signal lamp 18 is unlit, and the other signal lamps stay in the same conditions as shown in Table 2.

When the front-right signal lamp 17 is broken under the condition when the switching contact 151 of the signal light operating switch 15 is in contact with the left-side contact L, the source potential of the field effect transistor 148 rises, and this rising is detected by the lamp break detecting circuit 149. In response to the LFR detection output from the lamp break detecting circuit 149, the switch circuit S6 is controlled to an off state and the switch circuit S4 is controlled to an on state, so that no voltage is applied to the gate of the field effect transistor 148 and the oscillation outputs from the oscillator 142 are applied to the field effect transistors 146 and 147. Accordingly, the front-right signal lamp 17 is unlit, and the other signal lamps stay in the same conditions as shown in Table 2.

When the front-left signal lamp 16 is broken under the condition when the switching contact 151 of the signal light operating switch 15 is in contact with the left-side contact L, the source potential of the field effect transistor 147 rises, and this rising is detected by the lamp break detecting circuit 149. In response to the LFL detection output from the lamp break detecting circuit 149, the switch circuits S10, S12 and S14 are controlled to an off state and the switch circuits S13 and S15 are controlled to an on state, so that the oscillation output from the oscillator 141 is applied to the gate of the field effect transistor 148; no voltage is applied to the gate of the field effect transistor 147; and the oscillation output from the oscillator 143 is applied to the gate of the field effect transistor 146. Accordingly, the rear-left signal lamp 18 is driven to flash on/off at the high speed (200 cycles/min), substantially double that of the speed of normal flashing. Further, the front-left signal lamp 16 is unlit and the other signal lamps stay in the same conditions as shown in Table 2.

When the rear-right signal lamp 19 is broken under the condition when the switching contact 151 of the signal light operating switch 15 is in contact with the left-side contact L, the rear-right signal lamp 19 is unlit and the other signal lamps stay in the same conditions as shown in Table 2.

When the rear-left signal lamp 18 is broken under the condition when the switching contact 151 of the signal light operating switch 15 is in contact with the left-side contact L, the source potential of the field effect transistor 146 rises, and this rising is detected by the lamp break detecting circuit 149. According to the LRL detection output from the lamp break detecting circuit 149, the switch circuit S10 is controlled to an off state and the switch circuit S11 is controlled to an on state. Accordingly, the oscillation output from the oscillator 141 is applied to the gate of the field effect transistor 148, thereby lighting the front-right signal lamp 17 to make the side indication. Further, the oscillation output from the oscillator 143 is applied to the gate of the field effect transistor 147, to thereby drive the front-left signal lamp 16 to flash on and off at the high speed (200 cycles/min), substantially double the speed of normal flashing. The rear-left signal lamp 18 is unlit and the other signal lamps stay in the same conditions as shown in Table 2.

When the switching contact 151 of the signal light operating switch 15 is in contact with the neutral contact n, no coincidence detection outputs are generated from the coincidence detecting circuits a and b and a high potential output is accordingly generated from the AND gate c. Accordingly, one of the signal lamps that is broken is unlit and the other signal lamps stay in the same conditions as shown in Table 2.

In summary, the lighting conditions of the signal lamps when one of the signal lamps is broken are as follows:

**Table 3**

| | | | | | |
|---|---|---|---|---|---|
| Switch Position | Broken Lamps | Front Lamps | | Rear Lamps | |
| | | Right | Left | Right | Left |
| R | FR | - | PL | DF | U |
| | FL | WF | - | WF | U |
| | RR | DF | PL | - | U |
| | RL | WF | PL | WF | - |
| L | FR | - | WF | U | WF |
| | FL | PL | - | U | DF |
| | RR | PL | WF | - | WF |
| | RL | PL | DF | U | - |
| N | Broken lamp is unlit, and the conditions of the other lamps are the same as those shown in Table 2 | | | | |
| Note: FR: Front-Right FL: Front-Left RR: Rear-Right RL: rear-Left PL: Lit for Side Indication WF: On/Off for Turning Indication DF: On/Off at Double Speed for lamp Break Indication U: Unlit | | | | | |

While the switch circuits in the selector circuit 144 are illustrated in the form of contact switches in Fig. 2, the switch circuits may be constructed as electronic switches such as transistors, thereby increasing the switching speed and lengthening the life.

## Claims

1. A vehicle signal lighting apparatus comprising:
- front-right, front-left, rear-right and rear-left signal lamps (16-19) each having a single filament;
- switch means (15) manually operable into right-turn, left-turn and neutral positions indicative of an intended traveling direction of the vehicle;
- oscillation means (141, 142, 143) for generating first and second oscillation signals of respective first and second frequencies, said signal lamps (16-19) flashing on and off in a visually recognizable manner when driven by the first oscillation signal and flashing on and off as if continuously lit when driven by the second oscillation signal,
characterized in that said oscillation means (141, 142, 143) are arranged to further generate a third oscillation signal of a third frequency, said signal lamps (16-19) flashing on and off in a visually recognizable manner when driven by the third oscillation signal which is different than when driven by the first oscillation signal,
that lamp break detecting means (149) are provided for detecting breakage of said signal lamps (16-19), and
that control means (144) are provided for selectively driving said signal lamps (16-19) with the first, second and third oscillation signals in accordance with a selected position of said switch means (15) indicative of the intended traveling direction of the vehicle and in accordance with an output of said lamp break detecting means (149),
said control means (144) comprising a first selector circuit (1441) and a second selector circuit (1442), wherein
said first selector circuit (1441) drives the rear signal lamp (18, 19) corresponding to a selected turn position with the first oscillation signal when said switch means (15) is manipulated to the selected turn position,
said second selector circuit (1442) drives the rear signal lamp (18, 19) on the same side as a broken front signal lamp (16, 17) with the third oscillation signal when either one of the front signal lamps (16, 17) is detected as broken by said lamp break detecting means (149) and said switch means (15) is manipulated to the turn position corresponding to the broken front signal lamp (16, 17), said second selector circuit (1442) drives the front signal lamp (16, 17) on the same side as a broken rear signal lamp (18, 19) with the third oscillation signal when either one of the rear signal lamps (18, 19) is detected by said lamp break detecting means (149) as broken and said switch means (15) is manipulated to the turn position corresponding to the broken rear signal lamp (18, 19).

2. The vehicle signal lighting apparatus of claim 1, characterized in that said first selector circuit (1441) drives the front and rear signal lamps (16-19) corresponding to a selected turn position with the first oscillation signal for flashing on and off with the first frequency and drives the front signal lamp (16, 17) corresponding to the non-selected turn position with the second oscillation signal for flashing on and off with the second frequency when said switch means (15) is manipulated to either of the right-turn and left-turn positions.

3. The vehicle signal lighting apparatus of claim 1 or 2, characterized in that when said switch means (15) is manipulated to the neutral position, said control means (144) drives the front signal lamps (16, 17) with the second oscillation signal.

4. The vehicle signal lighting apparatus of claim 3, characterized in that said switch means (15) is normally in the neutral position.

5. The vehicle signal lighting apparatus of one of claims 1 to 4, characterized in that the third frequency is twice the first frequency.

## Patentansprüche

1. Leuchtsignaleinrichtung für ein Fahrzeug, umfassend
- eine vordere rechte, eine vordere linke, eine hintere rechte und eine hintere linke Signalleuchte (16-19) mit jeweils einem einzelnen Glühfaden,
- Schaltermittel (15), welche manuell in eine Rechtsabbiege-, in eine Linksabbiege- und in eine Neutralstellung einstellbar sind, die auf eine beabsichtigte Fahrtrichtung des Fahrzeugs hinweisen,
- Oszillationsmittel (141, 142, 143) zum Erzeugen eines ersten und eines zweiten Oszillationssignals einer ersten bzw. einer zweiten Frequenz, wobei die Signalleuchten (16-19) bei Ansteuerung durch das erste Oszillationssignal in visuell wahrnehmbarer Weise an- und ausgehen und bei Ansteuerung durch das zweite Oszillationssignal so an- und ausgehen, als ob sie dauerhaft leuchten würden, **dadurch gekennzeichnet,** dass die Oszillationsmittel (141, 142, 143) dazu ausgebildet sind, ferner ein drittes Oszillationssignal einer dritten Frequenz zu erzeugen, wobei die Signalleuchten (16-19) bei Ansteuerung durch das dritte Oszillationssignal in visuell wahrnehmbarer Weise an- und ausgehen, wobei dies anderes als bei Ansteuerung durch das erste Oszillationssignal ist, dass Lampenbrucherfassungsmittel (149) zur Erfassung eines Bruchs der Signalleuchten (16-19) vorgesehen sind und dass Steuermittel (144) vorgesehen sind, um die Signalleuchten (16-19) nach Maßgabe einer gewählten, auf die beabsichtigte Fahrtrichtung des Fahrzeugs hinweisenden Stellung der Schaltermittel (15) und nach Maßgabe eines Ausgangssignals der Lampenbrucherfassungsmittel (149) selektiv mit dem ersten, zweiten und dritten Oszillationssignal anzusteuern, wobei die Steuermittel (144) einen ersten Wählerschaltkreis (1441) und einen zweiten Wählerschaltkreis (1442) umfassen, wobei der erste Wählerschaltkreis (1441) die einer gewählten Abbiegestellung entsprechende hintere Signalleuchte (18, 19) mit dem ersten Oszillationssignal ansteuert, wenn die Schaltermittel (15) in die gewählte Abbiegestellung eingestellt sind, wobei der zweiter Wählerschaltkreis (1442) die hintere Signalleuchte (18, 19), die sich auf derselben Seite wie eine gebrochene vordere Signalleuchte (16, 17) befindet, mit dem dritten Oszillationssignal ansteuert, wenn eine der vorderen Signalleuchten (16, 17) seitens der Lampenbrucherfassungsmittel (149) als gebrochen erfasst wird und die Schaltermittel (15) in die der gebrochenen vorderen Signalleuchte (16, 17) entsprechende Abbiegestellung eingestellt sind, wobei der zweite Wählerschaltkreis (1442) die vordere Signalleuchte (16, 17), die sich auf derselben Seite wie eine gebrochene hintere Signalleuchte (18, 19) befindet, mit dem dritten Oszillationssignal ansteuert, wenn eine der hinteren Signalleuchten (18, 19) seitens der Lampenbrucherfassungsmittel (149) als gebrochen erfasst wird und die Schaltermittel (15) in die der gebrochenen hinteren Signalleuchte (18, 19) entsprechene Abbiegestellung eingestellt sind.

2. Fahrzeug-Leuchtslgnaleinrichtung nach Anspruch 1, dadurch gekennzeichnet, dass der erste Wählerschaltkreis (1441) die einer gewählten Abbiegestellung entsprechende vordere und hintere Signalleuchte (16, 19) mit dem ersten Oszillationssignal zum An- und Ausgehen mit der ersten Frequenz ansteuert und die der nicht gewählten Abbiegestellung entsprechende vordere Signalleuchte (16, 17) mit dem zweiten Oszillationssignal zum An- und Ausgehen mit der zweiten Frequenz ansteuert, wenn die Schaltermittel (15) in eine der Rechtsabbiege- und Linksabbiegestellungen eingestellt sind.

3. Fahrzeug-Leuchtsignaleinrichtung nach Anspruch 1 oder 2, dadurch gekennzeichnet, dass bei Einstellung der Schaltermittel (15) in die Neutralstellung die Steuermittel (144) die vorderen Signalleuchten (16,17) mit dem zweiten Oszillationssignal ansteuern.

4. Fahrzeug-Leuchtsignaleinrichtung nach Anspruch 3, dadurch gekennzeichnet, dass sich die Schaltermittel (15) normalerweise in der Neutralstellung befinden.

5. Fahrzeug-Leuchtsignaleinrichtung nach einem der Ansprüche 1 bis 4, dadurch gekennzeichnet, dass die dritte Frequenz doppelt so groß wie die erste Frequenz ist.

## Revendications

1. Dispositif de signalisation lumineuse d'un véhicule comprenant :
des lampes de signalisation avant-droite, avant-gauche, arrière-droite et arrière-gauche (16 à 19) ayant chacune un filament simple ;
un moyen de commutation (15) pouvant être activé manuellement pour établir des positions neutre, de changement de direction vers la droite et de changement de direction vers la gauche indiquant une direction souhaitée de déplacement du véhicule ;
des moyens d'oscillation (141, 142, 143) pour générer des premier et deuxième signaux d'oscillation présentant respectivement des première et deuxième fréquences, lesdites lampes de signalisation (16 à 19) clignotant d'une façon pouvant être reconnue visuellement lorsqu'elles sont actionnées par le premier signal d'oscillation et clignotant de telle sorte qu'elles semblent continuellement allumées lorsqu'elles sont actionnées par le deuxième signal d'oscillation,
caractérisé en ce que lesdits moyens d'oscillation (141, 142, 143) sont agencés de façon à générer en outre un troisième signal d'oscillation présentant une troisième fréquence, lesdites lampes de signalisation (16 à 19) clignotant d'une façon pouvant être reconnue visuellement lorsqu'elles sont actionnées par le troisième signal d'oscillation et qui est différente de la façon dont elles clignotent lorsqu'elles sont actionnées par le premier signal d'oscillation,
en ce qu'un moyen de détection de panne de lampe (149) est prévu pour détecter une panne desdites lampes de signalisation (16 à 19), et
en ce qu'un moyen de commande (144) est prévu pour actionner de façon sélective lesdites lampes de signalisation (16 à 19) à l'aide des premier, deuxième et troisième signaux d'oscillation selon une position choisie dudit moyen de commutation (15) indiquant la direction souhaitée de déplacement du véhicule et selon une sortie dudit moyen de détection de panne de lampe (149),
ledit moyen de commande (144) comprenant un premier circuit sélecteur (1441) et un second circuit sélecteur (1442), dans lesquels
ledit premier circuit sélecteur (1441) actionne la lampe de signalisation arrière (18, 19) correspondant à une position de changement de direction choisie à l'aide du premier signal d'oscillation lorsque ledit moyen de commutation (15) est manipulé pour être placé dans la position de changement de direction choisie,
ledit second circuit sélecteur (1442) actionne la lampe de signalisation arrière (18, 19) située du même côté qu'une lampe de signalisation avant qui est en panne (16, 17) à l'aide du troisième signal d'oscillation, lorsque ledit moyen de détection de panne de lampe (149) détecte que l'une des lampes de signalisation avant (16, 17) est en panne, et lorsque ledit moyen de commutation (15) est manipulé pour être placé dans la position de changement de direction correspondant à la lampe de signalisation avant qui est en panne (16, 17), ledit second circuit sélecteur (1442) actionne la lampe de signalisation avant (16, 17) située du même côté qu'une lampe de signalisation arrière qui est en panne (18, 19) à l'aide du troisième signal d'oscillation, lorsque ledit moyen de détection de panne de lampe (149) détecte que l'une des lampes de signalisation arrière (18, 19) est en panne et lorsque ledit moyen de commutation (15) est manipulé pour être placé dans la position de changement de direction correspondant à la lampe de signalisation arrière qui est en panne (18, 19).

2. Dispositif de signalisation lumineuse d'un véhicule selon la revendication 1, caractérisé en ce que ledit premier circuit sélecteur (1441) actionne les lampes de signalisation avant et arrière (16 - 19) correspondant à une position de changement de direction choisie, à l'aide du premier signal d'oscillation pour clignoter suivant la première fréquence et actionne la lampe de signalisation avant (16, 17) correspondant à la position de changement de direction non choisie à l'aide du deuxième signal d'oscillation pour clignoter suivant la deuxième fréquence lorsque ledit moyen de commutation (15) est manipulé pour être placé dans l'une des positions de changement de direction vers la droite et de changement de direction vers la gauche.

3. Dispositif de signalisation lumineuse d'un véhicule selon la revendication 1 ou 2, caractérisé en ce que, lorsque ledit moyen de commutation (15) est manipulé pour être placé en position neutre, ledit moyen de commande (144) actionne les lampes de signalisation avant (16, 17) à l'aide du deuxième signal d'oscillation.

4. Dispositif de signalisation lumineuse d'un véhicule selon la revendication 3, caractérisé en ce que ledit moyen de commutation (15) se trouve normalement en position neutre.

5. Dispositif de signalisation lumineuse d'un véhicule selon l'une des revendications 1 à 4, caractérisé en ce que la troisième fréquence est égale à deux fois la première fréquence.
